# EUROPÄISCHE PATENTSCHRIFT

(11) **EP 1 150 870 B1**
(45) Veröffentlichungstag und Bekanntmachung des Hinweises auf die Patenterteilung: **07.06.2006**
(21) Anmeldenummer: 00988622.7
(22) Anmeldetag: 16.11.2000
(51) Int. Cl.: B60S 1/32

(54) **WISCHVORRICHTUNG FÜR SCHEIBEN VON KRAFTFAHRZEUGEN**
WIPER DEVICE FOR MOTOR VEHICLE WINDSCREENS
DISPOSITIF ESSUIE-GLACE POUR VITRES DE VEHICULE AUTOMOBILE

(30) Priorität: 01.12.1999 DE 19957741
(43) Veröffentlichungstag der Anmeldung: 07.11.2001
(73) Patentinhaber: ROBERT BOSCH GMBH, 70442 Stuttgart (DE)
(72) Erfinder: KOTLARSKI, Thomas, 370 04 Ceské Budejovice (CZ); DE BLOCK, Peter, B-3545 Halen (BE); BREESCH, Frans, B-3840 Borgloon (BE); GRAMMENS, Joris, B-3350 Linter (BE)
(86) Internationale Anmeldenummer: PCT/DE2000/004039
(87) Internationale Veröffentlichungsnummer: WO 2001/040033

(56) Entgegenhaltungen:
- EP-A- 0 433 169
- DE-A- 3 343 318
- DE-A- 19 750 190

## Beschreibung

### Stand der Technik

Die Erfindung betrifft eine Wischvorrichtung für Scheiben von Kraftfahrzeugen nach der Gattung des unabhängigen Hauptanspruchs.

Bei vielen bekannten Wischvorrichtungen besteht das prinzipielle Problem, daß bei schnellerer Fahrt im mittleren Wischbereich des Wischblattes Wischfehler auftreten. Bedingt durch den Fahrtwind und die sich dadurch einstellenden Strömungsverhältnisse am Wischerarm entstehen Kräfte, die den Wischerarm und somit auch das Wischblatt in seinem Einhängebereich von der Scheibe abziehen. Gerade bei den flachbauenden Federleistenwischblättern, die sehr leicht sind, macht sich dieser ungünstige Einfluß auf den Wischerarm in überdurchschnittlicher Weise bemerkbar.

Eine denkbare Möglichkeit zur Beseitigung dieses Problems besteht darin, grundsätzlich die Auflagekraft des Wischerarms zu erhöhen. Entscheidender Nachteil dabei ist, daß dann der Wischgummi im Stand sehr schnell zerstört wird.

Aktive Auflagekraftregelungen, welche die Kraft nur während der Fahrt erhöhen, sind ebenfalls nachteilig, weil sie konstruktiv aufwendig und teuer sind.

Eine bekannte Lösung arbeitet mit nachträglich auf den Wischerarm montierten Kunststoff- oder Metallflügeln, um die Aerodynamik günstig zu beeinflussen. Damit erhöht sich zwar die Auflagekraft des Wischblattes mit steigender Fahrzeuggeschwindigkeit, nachteilig jedoch ist, daß störende Windgeräusche an Zwischenspalten und Kanten auftreten.

Ferner ist es beispielsweise aus der EP-B1-0633170 bekannt, an einen U-förmigen Wischerarm einen in Fahrtrichtung weisenden Spoiler direkt anzuformen. Dadurch vergrößert sich aber die Bauhöhe, was bei den erwähnten flachbauenden Wischblättern nicht toleriert werden kann.

Weiterhin ist aus der DE-A-3343318 ist eine Wischvorrichtung mit einem Wischerarm bekannt, der in seinem Mittelteil im Querschnitt einen im Wesentlichen S-förmigen Verlauf aufweist.

### Vorteile der Erfindung

Die erfindungsgemäße Vorrichtung mit den Merkmalen des Hauptanspruchs hat den Vorteil, daß bei Wischblättern, insbesondere bei flachbauenden Federleistenwischblättern, die Auflagekraft des Wischerarms im höheren Geschwindigkeitsbereich erhöht und somit die Wischqualität verbessert wird. Gleichzeitig reduziert sich der dazu notwendige Bauteil- und Kostenaufwand enorm. Weiterhin werden die schon genannten Nachteile der bekannten Lösungen vermieden.

Um die erfindungsgemäße maximale Auflagekrafterhöhung zu bewirken, ist der aus einem Teil gefertigte Wischerarm aerodynamisch günstig geformt. Die Form ist im Mittelteil des wischerarms so gewählt, daß sein Querschnitt einen im wesentlichen S-förmigen Verlauf aufweist. Durch diese Verlaufsgebung des Querschnitts entsteht ein Flügel, der die Funktion eines Spoilers erfüllt und den Wischerarm auf die Scheibe preßt. Damit ist erreicht, daß die Angriffsfläche, auf die der Fahrtwind trifft, stetig ansteigt und keine zum Fahrtwind senkrechte Fläche aufweist. Dadurch sinkt die Belastung auf den Wischerarm beträchtlich, eine insgesamt ruhigere Wischbewegung ist die Folge. Außerdem kann sich über dem Wischerarm eine laminare Strömung ohne Geräusche erzeugende Wirbel ausbilden.

Durch die Einstückigkeit des Wischerarms und die Integration des Spoilerflügels in den Wischerarm wird eine besonders kosten- und bauteilreduzierte Lösung erreicht. Außerdem zeichnet sich der Wischerarm durch ein attraktives Design aus. Beides ist vorteilhaft.

Aus Stabilitätsgründen ist es vorteilhaft, wenn sich an den im wesentlichen S-förmigen Querschnittsverlauf des Mittelteils ein bogenförmiger Verlauf anschließt. Aus fertigungstechnischen Gründen ist es sinnvoll, daß erfindungsgemäß der Krümmungswinkel des bogenförmigen Verlaufs bei etwa 90° liegt, weil dies durch die U-förmigen Enden des Wischerarms bereits vorgegeben ist.

Durch die in den Unteransprüchen angegebenen Maßnahmen sind vorteilhafte Weiterbildungen der Wischvorrichtung nach dem Hauptanspruch möglich.

Strömungstechnisch mögen vielleicht auch andere Winkel oder eventuell sogar andere Verlaufsgebungen für den sich an den im wesentlichen S-förmigen Querschnittsverlauf des Mittelteils anschließenden Querschnittsverlauf günstig sein, beispielsweise Winkel von 120° oder die schon erwähnten S-förmigen Verläufe.

Um eine optimale Auflagekrafterhöhung zu erzielen, ist es notwendig, daß der im wesentlichen S-förmige Querschnittsverlauf des Mittelteils des Wischerarms auf der dem Fahrtwind zugewandten Seite ausgebildet ist. Dann ergibt sich bei schneller Fahrt eine Strömungsverteilung des Fahrtwindes um den Wischerarm, die die Auflagekraft mit zunehmender Geschwindigkeit erhöht, und einem Abheben des Wischblattes von der zu wischenden Scheibe entgegenwirkt.

An den beiden Enden des Wischerarms verläuft der Querschnitt im wesentlichen U-förmig, um die Befestigung des Wischblattes an einer einstückig mit dem Wischerarm verbundenen Anschlußvorrichtung sowie die Befestigung des Wischerarms am Fahrzeug mit Hilfe eines Gelenkteils als Teil eines Klappgelenks zu ermöglichen.

Vorteilhaft ist außerdem, wenn die Übergangsbereiche in Längsrichtung des Wischerarms der jeweils im Querschnitt U-förmig verlaufenden Enden des Wischerarms hin zu den im Querschnitt S-förmig und eventuell anschließend bogenförmig verlaufenden Mittelteil stetig sind. Damit ist sichergestellt, daß sich keine Kanten oder Spalten im Verlauf befinden, die für ungünstige Strömungsverhältnisse oder unnötige und den Fahrkomfort beeinträchtigende Geräuschentwicklungen sorgen.

Um die Aerodynamik der Wischvorrichtung auch an den beiden Enden des Wischerarms günstig zu beeinflussen, ist es besonders vorteilhaft, wenn an den beiden Enden des Wischerarms im wesentlichen S-förmige Blenden angebracht sind, die ebenfalls eine Spoilerfunktion aufweisen.

In einer sehr einfachen Variante ist es auch denkbar, daß der Wischarm in seinem Mittelteil einfach nur schräggestellt ist, beispielsweise unter einem Winkel von 45° relativ zu den beiden Enden verdreht ist. Unabhängig von der Formgebung ist entscheidend, daß die Auflagekraft des Wischerarms erhöht wird.

### Zeichnung

In der Zeichnung ist ein Ausführungsbeispiel einer erfindungsgemäßen Wischvorrichtung dargestellt und in der nachfolgenden Beschreibung näher erläutert.

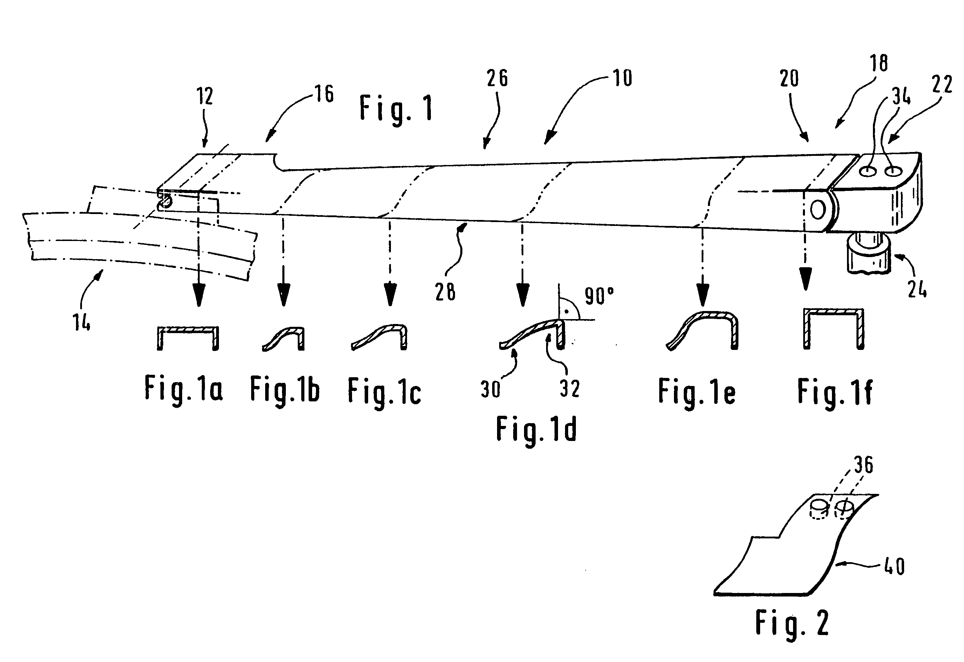

Es zeigen Figur 1 einen zu einer Wischvorrichtung gehörenden Wischerarm mit dessen Antriebsmitteln und ein mit strichpunktierten Linien angedeutetes Wischblatt in perspektivischer Darstellung. In den Teilfiguren 1a bis 1f sind die Querschnitte des Wischerarms entlang dessen Verlauf dargestellt. Figur 2 zeigt eine im wesentlichen S-förmige Blende in perspektivischer Darstellung.

### Beschreibung des Ausführungsbeispiels

Zu einem in Figur 1 dargestellten Wischerarm 10 gehören eine Anschlußvorrichtung 12, mit deren Hilfe ein strichpunktiert angedeutetes, langgestrecktes Wischblatt 14 gelenkig mit dem Wischerarm 10 verbunden ist. Die Anschlußvorrichtung 12 ist an dem freien Ende 16 des Wischerarms 10 einstückig mit dem Wischerarm 10 verbunden. Das Wischblatt 14 ist vorzugsweise ein sogenanntes Flachbalkenwischblatt, das ohne Bügelsystem auskommt. Solche Flachbalkenwischblätter sind beispielsweise aus der DE-OS 197 39 256 bekannt, auf die hier Bezug genommen wird.

An dem am Kraftfahrzeug geführten Ende 18 des Wischerarms 10 ist ein Gelenkteil 20 einstückig angeformt. Dieses Gelenkteil 20 ist Teil eines Klappgelenks 22, das es ermöglicht, den Wischerarm 10 zusammen mit dem Wischblatt 14 von der Scheibe abzuheben bzw. wegzuklappen. An dem Klappgelenk 22 sind Antriebsmittel 24 angeordnet, die durch eine pendelnd angetriebene Wischerwelle gebildet werden.

In Figur 1 sind weiterhin verschiedene Querschnittsverläufe des Wischerarms 10 an verschiedenen Punkten a bis f entlang des Wischerams 10 dargestellt.

Es ist deutlich zu erkennen, daß die Querschnittsverläufe an den beiden Enden 16 und 18 des Wischerarms 10 im wesentlichen U-förmige Verläufe aufweisen. Dabei ist der Querschnittsverlauf a im Vergleich zum Querschnittsverlauf f flacher und breiter. Die Querschnittsverläufe b bis e im langgestreckten Mittelteil 26 des Wischerarms 10 weisen auf der dem Fahrtwind zugewandten Seite 28 einen im wesentlichen S-förmigen Querschnittsverlauf 30 und einen sich daran anschließenden bogenförmigen Verlauf 32 mit einer Krümmung von etwa 90° auf. Der Krümmungswinkel von 90° sowie die typischen Verläufe 30 und 32 sind exemplarisch im Querschnittsverlauf d eingezeichnet.

Die Übergänge von den im wesentlichen U-förmigen Querschnitten hin zu den erfindungsgemäß gekrümmten Verläufen sind stetig. Damit ist sichergestellt, daß keine störenden Kanten, die für eine zusätzliche Geräuschbelastung sorgen würden, vorhanden sind.

Prinzipiell sind auch andere Querschnittsverläufe denkbar. Wichtig ist lediglich, daß sie so gewählt sind, daß der Fahrtwind eine maximale Auflagekrafterhöhung bewirkt, ohne dabei zusätzliche Geräusche zu erzeugen.

Zu betonen ist noch einmal die aus Figur 1 deutlich hervorgehende Einstückigkeit des kompletten Wischerarms 10, wobei die gewünschte Aerodynamik und die damit einhergehende Auflagekrafterhöhung durch den speziellen Querschnittsverlauf im Mittelteil 26 des Wischerarms 10 erreicht wird.

In Figur 2 ist eine im wesentliche S-förmige Blende 40 dargestellt, die an den Aufnahmepunkten 34 des Klappgelenks 22 aus Figur 1 mittels der Befestigungsbolzen 36 beispielsweise durch Vernieten oder Verclipsen befestigt wird. Durch diese Blende 40 wird sichergestellt, daß sich auch im Bereich des Klappgelenks 22 aerodynamisch günstige Strömungsverhältnisse im Betrieb einstellen.

## Patentansprüche

1. Wischvorrichtung, insbesondere für Scheiben von Kraftfahrzeugen, mit einem langgestreckten, einendig am Kraftfahrzeug geführten, angetriebenen Wischerarm (10), an dessen freies Ende ein auf die Scheibe auflegbares, langgestrecktes Wischblatt (14) pendelbar anlenkbar ist, und mit einem einstückig mit dem am Kraftfahrzeug geführten Ende (18) des Wischerarms (10) verbundenen Gelenkteil (20) als Teil eines Klappgelenks (22), das im Querschnitt im wesentlichen U-förmig ausgeführt ist, wobei der Querschnitt des Wischerarms (10) in seinem Mittelteil (26) einen im wesentlichen S-förmigen Verlauf (30) aufweist, **dadurch gekennzeichnet, dass** sich an den im wesentlichen S-förmigen Querschnitt (30) ein bogenförmiger Verlauf (32) mit einer Krümmung von etwa 90° anschließt.

2. Wischvorrichtung nach Anspruch 1, **dadurch gekennzeichnet, dass** der im wesentlichen S-förmige Querschnittsverlauf (30) des Mittelteils (26) auf der dem Fahrtwind zugewandten Seite ausgebildet ist.

3. Wischvorrichtung nach einem der Ansprüche 1 und 2, **dadurch gekennzeichnet, dass** eine mit dem freien Ende (16) des Wischerarms (10) einstückig verbundene Anschlußvorrichtung (12) für das Wischblatt (14) im Querschnitt im wesentlichen U-förmig ausgeführt ist.

4. Wischvorrichtung nach Anspruch 3, **dadurch gekennzeichnet, dass** die Übergangsbereiche in Längsrichtung des Wischerarms (10) der jeweils im Querschnitt U-förmig verlaufenden Enden (16, 18) des Wischerarms (10) hin zu dem Mittelteil (26) stetig sind.

5. Wischvorrichtung nach einem der Ansprüche 1 bis 4, **dadurch gekennzeichnet, dass** an den beiden Enden (16,18) des Wischerarms (10) im wesentlichen S-förmige Blenden angebracht sind.

6. Wischvorrichtung nach einem der vorhergehenden Ansprüche, **dadurch gekennzeichnet, dass** der Wischerarm (10) weitgehend spalt- und kantenlos ist.

## Claims

1. Wiper device, in particular for motor vehicle windscreens, with an elongate, driven wiper arm (10) which is guided at one end on the motor vehicle and to the free end of which an elongate wiper blade (14) which can be placed onto the windscreen is coupled in a manner such that it can move in pendulum fashion, and with an articulated part (20), which is connected integrally to that end (18) of the wiper arm (10) which is guided on the motor vehicle, as part of a hinged joint (22) which is of essentially U-shaped design in cross section, the cross section of the wiper arm (10) having an essentially S-shaped profile (30) in its central part (26), **characterized in that** a curved profile (32) with a curvature of approximately 90° adjoins the essentially S-shaped cross section (30).

2. Wiper device according to Claim 1, **characterized in that** the essentially S-shaped cross-sectional profile (30) of the central part (26) is formed on the side facing the relative wind.

3. Wiper device according to either of Claims 1 and 2, **characterized in that** a connecting device (12) for the wiper blade (14), which connecting device is connected integrally to the free end (16) of the wiper arm (10), is of essentially U-shaped design in cross section.

4. Wiper device according to Claim 3, **characterized in that** the transition regions in the longitudinal direction of the wiper arm (10) of the ends (16, 18), which each have a U-shaped profile in cross section, of the wiper arm (10) are continuous towards the central part (26).

5. Wiper device according to one of Claims 1 to 4, **characterized in that** essentially S-shaped covers are fitted at the two ends (16, 18) of the wiper arm (10).

6. Wiper device according to one of the preceding claims, **characterized in that** the wiper arm (10) is largely free from gaps and edges.

## Revendications

1. Dispositif d'essuie-glace notamment pour les vitres de véhicule automobile comportant un bras d'essuie-glace (10), entraîné, allongé, dont une extrémité est reliée au véhicule et dont l'extrémité libre reçoit avec une articulation pendulaire, un balai d'essuie-glace (14) allongé s'appliquant contre la vitre et une pièce d'articulation (20) reliée en une seule pièce à l'extrémité (18) guidée par le véhicule du bras d'essuie-glace (10), cette pièce faisant partie d'une articulation (22) rabattable, ayant une section essentiellement en forme de U, la section du bras d'essuie-glace (10) ayant dans sa partie centrale (26) une forme (30) principalement en S,
**caractérisé en ce que**
la section (30) dont la forme est principalement en S se poursuit par un tracé courbe (32) cintré à environ 90°.

2. Dispositif d'essuie-glace selon la revendication 1,
**caractérisé en ce que**
la forme de section principalement en S (30) de la partie centrale (26) est prévue sur le côté exposé au vent de circulation.

3. Dispositif d'essuie-glace selon l'une des revendications 1 et 2,
**caractérisé par**
un dispositif d'accouplement (12) pour le balai d'essuie-glace (14), ce dispositif, dont la section est principalement en U, étant relié en une seule pièce à l'extrémité libre (16) du bras d'essuie-glace (10).

4. Dispositif d'essuie-glace selon la revendication 3,
**caractérisé en ce que**
dans la direction longitudinale du bras d'essuie-glace (10) les zones transitoires des extrémités (16, 18) du bras d'essuie-glace (10) à section en U, rejoignent de manière continue la partie centrale (26).

5. Dispositif d'essuie-glace selon l'une des revendications 1 à 4,
**caractérisé par**
des caches principalement en forme de S aux deux extrémités (16, 18) du bras d'essuie-glace (10).

6. Dispositif d'essuie-glace selon l'une des revendications précédentes,
**caractérisé en ce que**
le bras d'essuie-glace (10) est pratiquement sans intervalle ni arête.
